# EUROPÄISCHE PATENTSCHRIFT

(11) **EP 0 800 555 B1**
(45) Veröffentlichungstag und Bekanntmachung des Hinweises auf die Patenterteilung: **14.10.1998**
(21) Anmeldenummer: 95942193.4
(22) Anmeldetag: 22.12.1995
(51) Int. Cl.: C08L 53/02, C08L 55/02

(54) **THERMOPLASTISCHE FORMMASSEN AUF DER BASIS VON PFROPFCOPOLYMEREN UND BLOCKPOLYMEREN**
THERMOPLASTIC MOULDING MASSES BASED ON GRAFT COPOLYMERS AND BLOCK POLYMERS
MASSES THERMOPLASTIQUES DE MOULAGE A BASE DE COPOLYMERES GREFFES ET DE POLYMERES SEQUENCES

(30) Priorität: 27.12.1994 DE 4446896
(43) Veröffentlichungstag der Anmeldung: 15.10.1997
(73) Patentinhaber: BASF AKTIENGESELLSCHAFT, 67056 Ludwigshafen (DE)
(72) Erfinder: GÜNTHERBERG, Norbert, D-67346 Speyer (DE); WEBER, Martin, D-67433 Neustadt (DE); KNOLL, Konrad, D-67069 Ludwigshafen (DE)
(86) Internationale Anmeldenummer: EP9505094
(87) Internationale Veröffentlichungsnummer: WO9620249

(56) Entgegenhaltungen:
- EP-A- 0 582 349
- GB-A- 2 056 465
- US-A- 5 089 558

## Beschreibung

Die Vorliegende Erfindung betrifft
A) 5 bis 98 Gew.-%, bezogen auf das Gesamtgewicht der Formmassen, eines kautschukartigen Pfropfcopolymerisats aufgebaut aus
   a₁) 30 bis 90 Gew.-%, bezogen auf A), einer Pfropfgrundlage a₁) aufgebaut aus
      a₁₁) einem zumindest teilweise vernetzten Acrylester-Polymerisat gebildet aus
         a₁₁₁) 50 bis 99,9 Gew.-%, bezogen auf a₁₁), mindestens eines Alkylacrylates mit 1 bis 10 C-Atomen im Alkylrest,
         a₁₁₂) 0,1 bis 5 Gew.-%, bezogen auf a₁₁), eines polyfunktionellen, vernetzend wirkenden Monomeren und
         a₁₁₃) 0 bis 49,9 Gew.-%, bezogen auf a₁₁), eines weiteren mit a₁₁₁) copolymerisierbaren Monomeren aus der Gruppe der Vinylalkylether mit 1 bis 8 C-Atomen im Alkylrest, Butadien, Isopren, Styrol, Acrylnitril, Methacrylnitril und/oder Methylmethacrylat
         und/oder
   a₁₂) einem Dienpolymerisat, aufgebaut aus
      a₁₂₁) 50 bis 100 Gew.-%, bezogen auf a₁₂) eines Diens und
      a₁₂₂) 0 bis 50 Gew.-%, bezogen auf a₁₂) weiterer copolymerisierbarer Monomeren aus der Gruppe der Vinylalkylether mit 1 bis 8 C-Atomen in der Alkylgruppe, Alkylacrylaten mit 1 bis 10 C-Atomen in der Alkylgruppe, Isopren, Styrol, Acrylnitril, Methacrylnitril und/oder Methylmethacrylat,
      und
   a₂) 10 bis 70 Gew.-%, bezogen auf A), einer auf die Pfropfgrundlage aufgepfropften Hülle, aufgebaut aus
      a₂₁) 50 bis 95 Gew.-%, bezogen auf a₂), eines vinylaromatischen Monomeren,
      a₂₂) 5-50 Gew.-% polaren, copolymerisierbaren Comonomeren aus der Gruppe Acrylnitril, Methacrylnitril, Ester der (Meth)acrylsäure mit 1 bis 4 C-Atomen im Alkylrest, Maleinsäureanhydrid und deren Imide, (Meth)acrylamid und/oder Vinylalkylether mit 1 bis 8 C-Atomen im Alkylrest,
B) 1 bis 90 Gew.-%, bezogen auf das Gesamtgewicht der Formmasse, eines Copolymerisats aus
   b₁) 50 bis 99 Gew.-% eines vinylaromatischen Monomeren
      und
   b₂) 1 bis 50 Gew.-% Monomeren wie für a₂₂) beschrieben,
C) 1 bis 70 Gew.-% eines kautschukelastischen Block-copolymerisates aus mindestens einem einpolymerisierte Einheiten eines vinylaromatischen Monomeren aufweisenden, eine Hartphase bildenden Block C_{A}
   und/oder eines Dienmonomere aufweisenden, eine erste kautschukelastische (Weich-)Phase bildenden Blocks C_{B}
   und mindestens einem einpolymerisierte Einheiten sowohl eines vinylaromatischen Monomeren wie eines Diens aufweisenden elastomeren, eine (gegebenenfalls zweite oder weitere) Weichphase bildenden Block c_{B/A},
   wobei die Glastemperatur T_{g} des Blocks C_{A} über 25°C und die des Blocks C_{B/A} unter 25°C liegt und das Phasenvolumen-Verhältnis von Block C_{A} zu Block C_{B/A} so gewählt ist, daß der Anteil der Hartphase am gesamten Blockcopolymerisat 1 - 40 Volumen-% und der Gewichtsanteil des Diens weniger als 50 Gew.% beträgt,
D) 0-300 Gew.-%, bezogen auf das Gewicht der Komponenten A) bis C), eines aromatischen Polycarbonats,
E) 0 bis 20 Gew.-%, bezogen auf das Gesamtgewicht der Formmassen, üblicher Zusatzstoffe und Verarbeitungshilfsmittel.

Mischungen thermoplastischer Polymere auf der Basis vinylaromatischer Polymerer und Pfropfkautschuken sind als sogenannte ABS -oder ASA- Polymerisate dem Fachmann bekannt und kommerziell erhältlich. Auch Blends solcher ASA bzw. ABS- Polymerisate mit anderen Thermoplasten, insbesondere Polycarbonaten sind bekannt.

Bedingt durch die Einführung immer schnellerer Verarbeitungsmaschinen wird von solchen Produkten insbesondere eine hohe Fließfähigkeit bei der Verarbeitung im Spritzguß und eine bruchlose Entformbarkeit gefordert. Bei der Formgebung durch Tiefziehen kommt es besonders auf eine hohe Bruchdehnung an.

Zur Optimierung dieser Eigenschaften werden in der Regel verschiedene Additive eingesetzt, die jedoch oft nur einen Parameter verbessern und dabei eine andere gewünschte Eigenschaft negativ beeinflussen. So führen Additive zur Verbesserung der Fließfähigkeit und der Tiefzieheigenschaften oft zu Einbußen bei den mechanischen Eigenschaften, während Additive zur Verbesserung der Entformbarkeit häufig die Fließfähigkeit beeinträchtigen.

Aufgabe der vorliegenden Erfindung war es daher, thermoplastische Formmassen auf der Basis von ABS- oder ASA- Polymerisaten zur Verfügung zu stellen, die ein ausgewogenes Eigenschaftsspektrum aufweisen.

Diese Aufgabe wird erfindungsgemäß durch die thermoplastischen Formmassen gemäß Anspruch 1 gelöst.

Bevorzugte Ausführungsformen der Erfindung sind den Unteransprüchen zu entnehmen.

Als Komponente A enthalten die erfindungsgemäßen Formmassen 5 bis 98, vorzugsweise 10 bis 90 und insbesondere 20 bis 80 Gew.-%, bezogen auf das Gesamtgewicht der Formmassen, eines kautschukartigen Pfropfcopolymerisats.

Dieses Pfropfcopolymerisat ist aufgebaut aus einer Pfropfgrundlage a₁) mit einer Glasübergangstemperatur Tg von unter -10°C und einer Pfropfauflage a₂) mit einer Glasübergangstemperatur Tg von mehr als 50°C, wobei der Mengenanteil der Pfropfgrundlage a₁) 30 bis 90, vorzugsweise 35-85 und insbesondere 40 bis 80 Gew.-% und die Pfropfauflage entsprechend 10 bis 70, vorzugsweise 15 bis 65 und insbesondere 20 bis 60 Gew.-% ausmacht.

Der Aufbau des Pfropfpolymerisats A) wird nachfolgend näher erläutert.

Die Pfropfgrundlage a₁) ist aufgebaut aus
a₁₁) einem zumindest teilweise vernetzten Acrylester-Polymerisat gebildet aus
   a₁₁₁) 50 bis 99,9 Gew.-%, bezogen auf a₁₁), mindestens eines Alkylacrylates mit 1 bis 10 C-Atomen im Alkylrest
   a₁₁₂) 0,1 bis 5 Gew.-%, bezogen auf a₁₁), eines polyfunktionellen, vernetzend wirkenden Monomeren und
   a₁₁₃) 0 bis 49,9 Gew.-%, bezogen auf a₁₁), eines weiteren mit a₁₁₁) copolymerisierbaren Monomeren aus der Gruppe der Vinylalkylether mit 1 bis 8 C-Atomen im Alkylrest, Butadien, Isopren, Styrol, Acrylnitril, Methacrylnitril und/oder Methylmethacrylat
   und/oder
a₁₂) einem Dienpolymerisat, aufgebaut aus
   a₁₂₁) 50 bis 100 Gew.-%, bezogen auf a₁₂) eines oder mehrerer Diene, und
   a₁₂₂) 0 bis 50 Gew.-%, bezogen auf a₁₂) weiterer copolymerisierbarer Monomeren aus der Gruppe der Vinylalkylether mit 1 bis 8 C-Atomen in der Alkylgruppe, Alkylacrylaten mit 1 bis 10 C-Atomen in der Alkylgruppe, Isopren, Styrol, Acrylnitril, Methacrylnitril und/oder Methylmethacrylat

Erfindungsgemäß verwendbar sind dementsprechend Formmassen, welche in der Komponente A entweder nur ein Polymerisat a₁₁) oder a₁₂) oder eine Mischung zweier Polymerer a₁₁) und a₁₂) als Pfropfgrundlage enthalten.

Im Falle der Verwendung von Mischungen aus Polymeren a₁₁) und a₁₂) ist das Mischungsverhältnis nicht kritisch, liegt aber im allgemeinen Bereich von 4:1 bis 1:4, insbesondere von 1:2 bis 2:1.

Die Acrylester-Polymerisate a₁₁) sind aufgebaut aus
a₁₁₁) 50 bis 99,9 Gew.-%, vorzugsweise 55-98 Gew.-%, und insbesondere 60-90 Gew.-%, eines Alkylacrylates mit 1 bis 10 C-Atomen im Alkylrest. Bevorzugte Acrylate sind solche mit 2 bis 10 C-Atomen im Alkylrest, insbesondere seien hier Ethylacrylat, tert.-, iso- und n-Butylacrylat und 2-Ethylhexylacrylat genannt, wovon die beiden letztgenannten ganz besonders bevorzugt werden.

Als vernetzend wirkende Monomere a₁₁₂), die in Mengen von 0,1-5, vorzugsweise 0,25 bis 4 und insbesondere 0,5 bis 3 Gew.-%, bezogen auf a₁₁) eingesetzt werden, seien beispielhaft polyfunktionelle Monomere mit mindestens 2 olefinischen, nichtkonjugierten Doppelbindungen genannt, von denen Divinylbenzol, Dialkylfumarat, Diallylphthalat, Triallylcyanurat, Trialkylisocyanurat, Tricyclodecenylacrylat und Dihydrodicyclopentadienylacrylat namentlich genannt seien. Besonders bevorzugt werden Tricyclodecenylacrylat und Dihydrodicyclopentadienylacrylat.

Als weitere Monomere a₁₁₃) können bis zu 49,9, vorzugsweise 5 bis 44,9 und insbesondere 10 bis 39,9 Gew.-% und a₁₁₁) copolymerisierbare Monomere aus der Gruppe der Vinylalkylether mit 1-8 C-Atomen im Alkylrest (z.B. Vinylmethylether, Vinylpropylether, Vinylethylether), Butadien, Isopren, Styrol, Acrylnitril, Methacrylnitril und/oder Methacrylnitril bei der Herstellung von a₁₁) verwendet werden.

Durch Verwendung solcher Comonomere läßt sich das Eigenschaftsprofil der Polymerisate a₁₁) z.B. hinsichtlich Vernetzungsgrad steuern, was in manchen Fällen wünschenswert sein kann.

Verfahren zur Herstellung von Polymeren a₁₁) sind dem Fachmann bekannt, und in der Literatur beschrieben. Entsprechende Produkte sind auch kommerziell im Handel erhältlich.

Als besonders vorteilhaft hat sich in einigen Fällen die Herstellung durch Emulsionspolymerisation erwiesen.

Bei der Herstellung des Pfropfmischpolymerisats nach der in der DE-PS 12 60 135 beschriebenen Methode wird zunächst die Pfropfgrundlage A hergestellt; wenn die Pfropfgrundlage ein Acrylatkautschuk sein soll, wird der oder die Acrylsäureester a₁₁₁), das polyfunktionelle Monomere a₁₁₂) und gegebenenfalls das Monomer a₁₁₃) in wäßriger Emulsion bei 20 bis 100°C, bevorzugt zwischen 50 und 80°C polymerisiert. Es können die üblichen Emulgatoren wie die Alkalisalze von Alkyl- Arylsulfonsäuren, Alkylsulfate, Fettalkoholsulfonate, Salze höherer Fettsäuren mit 10 bis 30 Kohlenstoffatomen oder Harzseifen verwendet werden. Vorzugsweise nimmt man die Natrium- oder Kaliumsalze von Alkylsulfonaten oder von Fettsäuren mit 10 bis 18 Kohlenstoffatomen. Es ist günstig, die Emulgatoren in einer Menge von 0,5 bis 5 Gew.-%, insbesondere von 1 bis 2 Gew.-%, bezogen auf das Gesamtgewicht der für die Herstellung der Pfropfgrundlage verwendeten Monomeren, einzusetzen. Im allgemeinen wird bei einem Wasser/Monomer-Verhältnis von 2:1 bis 0,7:1 gearbeitet. Als Polymerisationsinitiatoren dienen insbesondere die gebräuchlichen Persulfate, wie z.B. Kaliumperoxodisulfat; geeignet sind jedoch auch Redoxsysteme. Die Menge an Initiatoren (z.B. 0,1 bis 1 Gew.-%, bezogen auf das Gesamtgewicht der Monomeren) richtet sich in bekannter Weise nach dem gewünschten Molgewicht.

Als Polymerisationshilfsstoffe können die üblichen Puffersubstanzen, durch welche pH-Werte von vorzugsweise 6 bis 9 eingestellt werden, z.B. Natriumbicarbonat und Natriumpyrophosphat, sowie bis 3 Gew.-% eines Molekulargewichtsreglers, wie Mercaptan, Terpinol oder dimeres α-Methylstyrol verwendet werden.

Die genauen Polymerisationsbedingungen, insbesondere Art, Dosierung und Menge des Emulgators werden innerhalb der oben angegebenen Bereiche so bestimmt, daß der erhaltene Latex des vernetzten Acrylsäureester-Polymerisats einen d₅₀-Wert im Bereich von etwa 30 bis 1000 nm, bevorzugt im Bereich von 50 bis 800 nm besitzt. Der d₅₀-Wert der Teilchengröße wird wie üblich definiert als das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder unter einer bestimmten Größe haben. Der mittlere Teilchendurchmesser, der auch als d₅₀-Wert der integralen Masseverteilung bezeichnet wird, ist dabei als der Wert definiert, bei dem 50 Gewichtsprozent der Teilchen einen kleineren und 50 Gewichtsprozent der Teilchen einen größeren Durchmesser als der d₅₀-Wert aufweisen.

Vorzugsweise hat der Latex eine enge Teilchengrößenverteilung, d.h. der Quotient$\text{Q =} \frac{{\text{d}}_{\text{90}} {\text{- d}}_{\text{10}}}{{\text{d}}_{\text{50}}}$ ist vorzugsweise kleiner als 0,5, insbesondere kleiner als 0,35.

An Stelle der Polymerisate a₁₁) können die Pfropfmischpolymerisate A) auch Dienpolymerisate a₁₂) als Pfropfgrundlage enthalten. Bei den Polymerisaten a₁₂) handelt es sich um Diencopolymerisate, die neben 50 bis 100, vorzugsweise 70 bis 99 Gew.-%, eines oder mehrerer Diene, vorzugsweise Butadien oder Isopren noch bis zu 50, vorzugsweise 2 bis 30 Gew.-% weiterer copolymerisierbarer Monomerer enthalten können. Als solche sind sowohl die unter a₁₁₁) vorstehend beschriebenen Alkylacrylate als auch die Monomeren a₁₁₃) geeignet; wegen detaillierter Ausführungen sei auf die dortige Beschreibung verwiesen.

Wenn der Pfropfkern ein Dienkautschuk sein soll, wird zweckmäßig wie folgt verfahren: Das Elastomer, die Pfropfgrundlage a₁) wird hergestellt, indem a₁₂₁) und a₁₂₂) in wäßriger Emulsion in an sich bekannter Weise bei Temperaturen von 20 bis 100°C, vorzugsweise von 50 bis 80°C, polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natrium- oder Kaliumsalze von Alkylsulfonaten oder Fettsäuren mit 10 bis 18 Kohlenstoffatomen. Es ist günstig, die Emulgatoren in Mengen von 0,5 bis 5 Gew.-%, insbesondere von 0,5 bis 2 Gew.-%, bezogen auf die bei der Herstellung der Pfropfgrundlage a₁) eingesetzten Monomeren, einzusetzen. Im allgemeinen wird bei einem Wasser- und Monomeren-Verhältnis von 2:1 bis 0,7:1 gearbeitet. Als Polymerisationsinitiatoren dienen insbesondere die gebräuchlichen Persulfate, wie Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage a₁) eingesetzten Monomeren, eingesetzt. Als weitere Polymerisationshilfsstoffe können die üblichen Puffersubstanzen, durch welche pH-Werte von vorzugsweise 6 bis 9 eingestellt werden - z.B. Natriumbicarbonat und Natriumpyrophosphate dienen; ferner können in der Regel 0,1 bis 3 Gew.-% eines Molekulargewichtsreglers- wie Mercaptane, Terpinole oder dimeres α-Methylstyrol - bei der Polymerisation verwendet werden.

Die genauen Polymerisationsbedingungen, insbesondere Art, Dosierung und Menge des Emulgators, werden innerhalb der oben angegebenen Bereiche im einzelnen so gewählt, daß der erhaltene Latex des Dienpolymerisats a₁₂) einen d₅₀-Wert (vgl.oben) im Bereich von etwa 100 bis 750 nm, vorzugsweise im Bereich von 100 bis 600 nm, besitzt. Alternativ kann auch ein Emulsionspolymerisat mit mittleren Teilchengrößen im Bereich von 60-150 nm agglomeriert werden, wie des z.B. in der DE-B 2427960 beschrieben ist.

Auf die Pfropfgrundlage a₁₁) und/oder a₁₂) ist eine Pfropfhülle a₂) aufgepfropft, die durch Copolymerisation von
a₂₁) 50 bis 95, vorzugsweise 60 bis 90 und insbesondere 65 bis 80 Gew.-% eines vinylaromatischen Monomeren, vorzugsweise Styrol oder substituierten Styrolen der allgemeinen Formel I 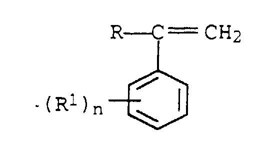 wobei R einen Alkylrest mit 1 bis 8 C-Atomen, ein Wasserstoffatom oder Halogen und R¹ Alkylreste mit 1 bis 8 C-Atomen oder ein Halogenatom darstellen und n den Wert 0, 1, 2 oder 3 hat, bevorzugt Styrol, α-Methylstyrol, p-Methylstyrol und tert.-Butylstyrol, und
a₂₂) 5 bis 50, vorzugsweise 10 bis 40 und insbesondere 20 bis 35 Gew.-% polaren copolymerisierbaren Monomeren, ausgewählt aus der Gruppe bestehend aus Acrylnitril, Methacrylnitril, Ester der Meth(acrylsäure) mit 1 bis 4 C-Atomen im Alkylrest, Maleinsäureanhydrid und deren Imide, (Meth)acrylamid und/oder Vinylalkylether mit 1-8 C-Atomen im Alkylrest oder deren Mischungen
erhalten wird.

Die Pfropfhülle a₂₂) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 1 260 135, DE-OS 32 27 555, DE-OS 31 49 357, DE-OS 31 49 358 und der DE-OS 34 14 118 beschrieben ist.

Je nach den gewählten Bedingungen entsteht bei der Pfropfmischpolymerisation ein bestimmter Anteil an freien Copolymerisaten von Styrol und Acrylnitril.

Es ist vorteilhaft, die Pfropfmischpolymerisation auf das als Pfropfgrundlage a₁) dienende Polymerisat wiederum in wäßriger Emulsion durchzuführen. Sie kann im gleichen System wie die Polymerisation der Pfropfgrundlage vorgenommen werden, wobei weiter Emulgator und Initiator zugegeben werden kann. Diese müssen mit den zur Herstellung der Pfropfgrundlage a₁) verwendeten Emulgatoren bzw. Initiatoren nicht identisch sein. So kann es z.B. zweckmäßig sein, als Initiator für die Herstellung der Pfropfgrundlage a₁) ein Persulfat zu verwenden, zur Polymerisation der Pfropfhülle a₂) jedoch ein Redoxinitiatorsystem einzusetzen. Im übrigen gilt für die Wahl von Emulgator, Initiator und Polymerisationshilfsstoffen das bei der Herstellung der Pfropfgrundlage a₁) gesagte. Das aufzupfropfende Monomerengemisch kann dem Reaktionsgemisch auf einmal, absatzweise in mehreren Stufen oder vorzugsweise kontinuierlich während der Polymerisation zugegeben werden. Die Pfropfmischpolymerisation wird vorteilhaft so gesteuert, daß ein Pfropfgrad von 10 bis 60 Gew.-%, vorzugsweise von 15 bis 45 Gew.-%, resultiert.

Das Pfropfmischpolymerisat (a₁ + a₂) weist im allgemeinen eine mittlere Teilchengröße von vorzugsweise 50 bis 1000 nm, insbesondere von 100 bis 700 nm (d₅₀-Gewichtsmittelwert) auf. Die Bedingungen bei der Herstellung des Elastomeren a₁) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938, beschrieben. Die Teilchenvergrößerung des Latex des Elastomeren kann z.B. mittels Agglomeration bewerkstelligt werden.

In einigen Fällen haben sich auch Mischungen aus mehreren Acrylester-Polymerisaten bewährt, die unterschiedliche Teilchengrößen aufweisen. Entsprechende Produkte sind in der DE-OS 28 26 925 und dem US-Patent 5,196,480 beschrieben, auf die hier wegen näherer Details verwiesen sei.

Demzufolge werden als bevorzugte Mischungen von Acrylesterpolymerisaten solche eingesetzt, in denen ein erstes Polymer eine Teilchengröße d₅₀ im Bereich von 50 bis 150 nm und ein zweites Polymer eine Teilchengröße von 200 bis 700 nm aufweist, wie sie in der bereits erwähnten US-PS 5,196,480 beschrieben werden.

Gemäß einer weiteren bevorzugten Verwendung werden Mischungen aus Polymeren a₁₁) (wie sie in der DE-AS 11 64 080, der DE-PS 19 11 882 und der DE-OS 31 49 358 beschrieben werden) und Polymeren a₁₂ eingesetzt, wobei die Polymeren a₁₂) im allgemeinen eine mittlere Teilchengröße im Bereich von 50 bis 1000, vorzugsweise von 100 bis 700 nm aufweisen.

Nachstehend seien einige bevorzugte Pfropfpolymerisate A) angeführt:
A/1: 60 Gew.-% Pfropfgrundlage a₁₁) aus
   a₁₁₁) 98 Gew.-% n-Butylacrylat und
   a₁₁₂) 2 Gew.-% Dihydrodicyclopentadienylacrylat und
      40 Gew.-% Pfropfhülle a₂) aus
   a₂₁) 75 Gew.-% Styrol und
   a₂₂) 25 Gew.-% Acrylnitril
A/2: Pfropfgrundlage wie bei A/1 mit 5 Gew.-% einer Pfropfhülle aus
   a₂₁) 12,5 Gew.-% Styrol (1. Pfropfstufe) und
      40 Gew.-% einer zweiten Pfropfstufe aus
   a₂₁) 75 Gew.-% Styrol und
   a₂₂) 25 Gew.-% Acrylnitril
A/2: Pfropfgrundlage wie bei A/1 mit 13 Gew.-% einer ersten Pfropfstufe aus Styrol und 27 Gew.-% einer zweiten Pfropfstufe aus Styrol und Acrylnitril im Gewichtsverhältnis 3:1.

Als Komponente B) enthalten die erfindungsgemäßen Formmassen 1 bis 90, vorzugsweise 5 bis 85 Gew.-%, besonders bevorzugt 10 bis 80 Gew.-%, bezogen auf das Gesamtgewicht der Formmasse, eines Copolymerisats aus
b₁) 50 bis 99, vorzugsweise 55 bis 90 und insbesondere 65 bis 85 Gew.-% vinylaromatischen Monomeren, vorzugsweise Styrol und/oder substituierten Styrolen der allgemeinen Formel I
   und
b₂) 1 bis 50, vorzugsweise 10 bis 45 und insbesondere 15 bis 35 Gew.-% der für a₂₂) beschriebenen Monomeren.

Derartige Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 40.000 bis 500.000, insbesondere von 100.000 bis 250.000, was Viskositätszahlen im Bereich von 40 bis 200, vorzugsweise von 40 bis 160 ml/g, entspricht (gemessen in 0,5 gew.-%iger Lösung in Dimethylformamid bei 25°C).

Das Polymere B) kann auch eine Mischung verschiedener Copolymere von Styrol bzw. α-Methylstyrol und Acrylnitril sein, die sich beispielsweise im Gehalt an Acrylnitril oder in der mittleren Molmasse unterscheiden.

Der Anteil der Komponente C) an den Formmassen beträgt, bezogen auf die Summe der Komponenten A), B), C) und gegebenenfalls D), 1 bis 70, bevorzugt 2 bis 50 und besonders bevorzugt 3 bis 40 Gew.-%. Komponente C) ist ein kautschukelastisches Blockcopolymerisat aus
- mindestens einem Block C_{A}, der einpolymerisierte Einheiten eines vinylaromatischen Monomeren aufweist und eine sogenannte "Hartphase" bildet, und/oder
- einem Block C_{B}, der einpolymerisierte Dienmonomere aufweist, und eine (erste) kautschukelastische (Weich-)Phase bildet, und
- mindestens einem Block C_{B/A}, der einpolymerisierte Einheiten eines vinylaromatischen Monomeren sowie eines Diens aufweist und eine sogenannte "Weichphase" bildet,
wobei die Glastemperatur T_{g} des Blocks C_{A} über 25°C und die des Blocks C_{B/A} unter 25°C liegt und das Phasenvolumen-Verhältnis von Block C_{A} zu Block C_{B/A} so gewählt ist, daß der Anteil der Hartphase am gesamten Blockcopolymerisat 1 - 40 Gew.-% und der Gewichtsanteil des Diens weniger als 50 Gew.-% beträgt.

Detaillierte Angaben zu Aufbau und Herstellung der Komponente C) finden sich nachfolgend, und weiterhin in der DE-OS 44 20 952, auf die hier ausdrücklich verwiesen wird.

Die Weichphase (Block C_{B/A}) wird durch statistische Copolymerisation von vinylaromatischen Monomeren und Dienen in Gegenwart eines polaren Cosolvens erhalten.

Ein Blockcopolymerisat C) kann z.B. durch eine der allgemeinen Formeln 1 bis 11 dargestellt werden:
(1) (C_{A}-C_{B/A})ₙ;
(2) (C_{A}-C_{B/A})ₙ-C_{A}, bevorzugt C_{A}-C_{B}/A-C_{A};
(3) C_{B/A}-(C_{A}-C_{B/A})ₙ;
(4) X-[(C_{A}-C_{B/A})_{n]m+1};
(5) X-[(C_{B}/C_{A}-A)_{n]m+1}, bevorzugt X-[-C_{B}/A-C_{A}]₂;
(6) X-[(C_{A}-C_{B/A})_{n-A]m+1};
(7) X-[(C_{B/A}-C_{A})ₙ-C_{B/A]m+1};
(8) Y-[(C_{A}-C_{B/A})_{n]m+1};
(9) Y-[(C_{B/A}-C_{A})_{n]m+1}; bevorzugt Y-[-C_{B/A}-C_{A}]₂;
(10) Y-[(C_{A}-C_{B/A})_{n-A]m+1};
(11) Y-[(C_{B/A}-C_{A})_{n-B/A]m+1};
wobei C_{A} für den vinylaromatischen Block und C_{B/A} für die Weichphase, also den statistisch aus Dien- und vinylaromatischen Einheiten aufgebauten Block steht, X den Rest eines n-funktionellen Initiators, Y den Rest eines m-funktionellen Kopplungsmittels und m und n natürliche Zahlen von 1 bis 10 bedeuten.

Besonders bevorzugt ist ein Blockcopolymerisat, dessen Weichphase unterteilt ist in Blöcke
(12) (C_{B/A})₁-(_{CB/A})₂;
(13) (C_{B/A})₁-(C_{B/A})₂-(C_{B/A})₁;
(14) (C_{B/A})₁-(C_{B/A})₂-(C_{B/A})₃;
deren Vinylaromat/Dien-Verhältnis in den einzelnen Blöcken C_{B/A} unterschiedlich ist oder sich innerhalb eines Blocks in den Grenzen (C_{B/A})₁ → (C_{B/A})₃ kontinuierlich ändert, wobei die Glasübergangstemperatur T_{g} jedes Teilblocks unter 25°C liegt.

Ein Blockcopolymerisat, das mehrere Blöcke C_{B/A} und/oder C_{A} mit unterschiedlicher Molmasse je Molekül aufweist, ist ebenfalls bevorzugt, beispielsweise in der Kombination (3) mit (13) oder (14).

Ebenso kann an die Stelle eines ausschließlich aus vinylaromatischen Einheiten aufgebauten Blocks C_{A} ein Block C_{B} treten, da es insgesamt lediglich darauf ankommt, daß ein kautschukelastisches Blockcopolymerisat gebildet wird. Solche Copolymerisate können z.B. die Struktur (15) bis (18) haben
(15) C_{B}-(C_{B/A})
(16) (C_{B/A})-C_{B}-(C_{B/A})
(17) (C_{B/A})₁-C_{B}-(C_{B/A})₂
(18) C_{B}-(C_{B/A})₁-(C_{B/A})₂.

Bevorzugt als vinylaromatische Verbindung im Sinne der Erfindung ist Styrol und ferner α-Methylstyrol und Vinyltoluol sowie Mischungen dieser Verbindungen. Bevorzugte Diene sind Butadien und Isopren, ferner Piperylen, 1-Phenylbutadien sowie Mischungen dieser Verbindungen.

Eine besonders bevorzugte Monomerkombination ist Butadien und Styrol. Alle nachstehenden Gewichts- und Volumenangaben beziehen sich auf diese Kombination.

Der C_{B/A}-Block wird aus etwa 75 - 30 Gew.-% Styrol und 25 - 70 Gew.-% Butadien aufgebaut. Besonders bevorzugt hat ein Weichblock einen Butadienanteil zwischen 35 und 70 % und einen Styrolanteil zwischen 65 und 30 %.

Der Gewichtsanteil des Diens im gesamten Blockcopolymer liegt im Falle der Monomerkombination Styrol/ Butadien bei 15 bis unter 50 Gew.-%, derjenige der vinylaromatischen Komponente entsprechend bei 85 - 50 Gew.-%. Besonders bevorzugt sind Butadien-Styrol-Blockcopolymere mit einer Monomerzusammensetzung aus 25 bis unter 50 Gew.-% Dien und 75 - 50 Gew.-% an vinylaromatischer Verbindung.

Die Blockcopolymeren werden durch anionische Polymerisation in einem unpolaren Lösungsmittel unter Zusatz eines aprotischen, polaren Cosolvens hergestellt. Als Lösungsmittel werden bevorzugt aliphatische Kohlenwasserstoffe wie Cyclohexan oder Methylcyclohexan verwendet. Als Cosolvens werden insbesondere Ether, beispielsweise Tetrahydrofuran und aliphatische Polyether wie Diethylenglykoldimethylether, und tertiäre Amine, z.B. Tributylamin und Pyridin bevorzugt. Das polare Cosolvens wird dem dem unpolaren Lösungsmittel in einer geringen Menge, z.B. von 0.5 - 5 Vol.% zugesetzt. Besonders bevorzugt ist Tetrahydrofuran in einer Menge von 0.1 - 0.3 Vol -%. Erfahrungsgemäß kommt man mit einer Menge von etwa 0.2 Vol.-% in den meisten Fällen aus.

Die anionische Polymerisation wird mittels metallorganischer, insbesondere lithiumorganischer Verbindungen wie Methyllithium, Ethyllithium, Propyllithium, n-Butyllithium, sek. Butyllithium und tert. Butyllithium initiiert. Die metallorganische Verbindung wird als Lösung in einem chemisch indifferenten (inerten) Kohlenwasserstoff in einer Menge von üblicherweise 0,002 bis 5 Mol.-%, bezogen auf die Monomeren, zugesetzt.

Die Polymerisationstemperatur kann zwischen 0 und 130°C betragen. Bevorzugt wird der Temperaturbereich zwischen 30 und 100°C.

Erfindungsgemäß liegt der Volumenanteil der aus Dien- und vinylaromatischen Sequenzen aufgebauten Weichphase an der Komponente C) bei 60 - 99, bevorzugt bei 70 - 95 und besonders bevorzugt bei 80 - 90 Vol.-%. Die aus den vinylaromatischen Monomeren entstandenen Blöcke A bilden die Hartphase, deren Volumenanteil entsprechend 1 - 40, bevorzugt 5 - 30 und besonders bevorzugt 10 - 20 Vol.-% ausmacht.

Die Weichphase der Komponente C) hat üblicherweise eine Glasübergangstemperatur zwischen -50 und +25°C, bevorzugt -50 bis +5°C.

Das Molekulargewicht des Blocks C_{A} liegt dabei i.a. bei 1000 bis 200.000, bevorzugt bei 3.000 bis 80.000 [g/mol]. Innerhalb eines Moleküls können C_{A}-Blöcke unterschiedliche Molmassen haben.

Das Molekulargewicht des Blocks C_{B/A} liegt üblicherweise bei 2.000 bis 250.000, bevorzugt 5.000 bis 150.000 [g/mol]. Auch Block C_{B/A} kann wie Block C_{A} innerhalb eines Moleküls unterschiedliche Mole-kulargewichtswerte einnehmen.

Das Kupplungszentrum X wird durch die Umsetzung der lebenden anionischen Kettenenden mit einem mindestens bifunktionellen Kupplungsagens gebildet. Beispiel für derartige Verbindungen sind in den US-PS 3 985 830, 3 280 084, 3 637 554 und 4 091 053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde wie Terephthalaldehyd und Ester wie Ethylformiat oder -benzoat geeignet.

Der statistische Block C_{B/A} kann selbst wieder in Blöcke C_{B1/A1}-C_{B2/A2}-C_{B3/A3} unterteilt sein. Bevorzugt besteht der statistische Block aus 2 bis 15 statistischen Teilblöcken, besonders bevorzugt aus 3 bis 10 Teilblöcken.

Die Polymerisation wird mehrstufig durchgeführt und bei monofunktioneller Initiierung z.B. mit der Herstellung des Hartblocks C_{A} begonnen. Ein Teil der Monomeren wird im Reaktor vorgelegt und die Polymerisation durch Zugabe des Initiators gestartet. Um einen definierten, Kettenaufbau zu erzielen, ist es empfehlenswert, jedoch nicht zwingend, den Prozeß bis zu einem hohen Umsatz (über 99%) zu führen, bevor die zweite Monomerzugabe erfolgt.

Die Abfolge der Monomerzugabe richtet sich nach dem gewählten Blockaufbau. Bei monofunktioneller Initiierung wird z.B. zuerst die vinylaromatische Verbindung entweder vorgelegt oder direkt zudosiert. Danach sollten Dien und Vinylaromat möglichst gleichzeitig zugegeben werden. Durch das Mengenverhältnis von Dien zu vinylaromatischer Verbindung, die Konzentration und chemische Struktur der Lewis-Base sowie die Temperatur wird der statistische Aufbau und die Zusammensetzung des Blocks C_{B/A} bestimmt. Erfindungsgemäß nimmt das Dien relativ zur Gesamtmasse einschließlich vinylaromatischer Verbindung einen Gewichtsanteil von 25% bis 70% ein. Anschließend kann Block C_{A} durch Zugabe des Vinylaromaten anpolymerisiert werden. Stattdessen können benötigte Polymerblöcke auch durch die Kopplungsreaktion miteinander verbunden werden. Im Falle der bifunktionellen Initiierung wird zuerst der C_{B/A}-Block aufgebaut, gefolgt vom C_{A}-Block.

Die weitere Aufarbeitung erfolgt nach den üblichen Verfahren. Es empfiehlt sich, dabei in einem Rührkessel zu arbeiten und mit einem Alkohol wie Isopropanol die Polymerisation abzubrechen, vor der weiteren Aufarbeitung in üblicher Weise mit CO₂/Wasser schwach sauer zu stellen, das Polymer mit einem Oxidationsinhibitor und einem Radikalfänger (handelsübliche Produkte wie Trisnonylphenylphosphit (TNPP) oder α-Tocopherol (Vitamin E) bzw. unter dem Handelsnamen Irganox 1076 oder Irganox 3052 erhältliche Produkte) zu stabilisieren, das Lösungsmittel nach den üblichen Verfahren zu entfernen, zu extrudieren und zu granulieren.

Als Komponente D) können die erfindungsgemäßen thermoplastischen Formmassen 0 bis 300 Gew.-%, bezogen auf die Summe von A),B) und C) vorzugsweise 0 bis 200 Gew.-%, mindestens eines Polycarbonats enthalten.

Geeignete Polycarbonate sind beispielsweise solche auf Basis von Diphenolen der allgemeinen Formel II 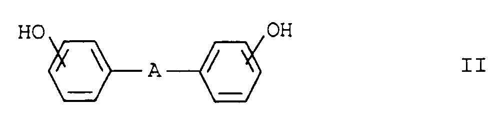 worin A eine Einfachbindung, eine C₁- bis C₃-Alkylen-, eine C₂- bis C₃-Alkyliden-, eine C₃- bis C₆-Cycloalkylidengruppe, sowie -S- oder -SO₂- bedeutet.

Bevorzugte Diphenole der Formel II sind beispielsweise 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan.

Sowohl Homopolycarbonate als auch Copolycarbonate sind als Komponente D) geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Weiterhin können die als Komponente D) geeigneten Polycarbonate an den aromatischen Einheiten ein- bis dreifach mit Halogenatomen, bevorzugt mit Chlor und/oder Brom, substituiert sein. Besonders bevorzugt sind jedoch halogenfreie Verbindungen.

Als besonders geeignet haben sich Polycarbonate erwiesen, die relative Viskositäten ηᵣₑₗ von 1,10 bis 1,50, insbesondere von 1,25 bis 1,40 aufweisen. Dies entspricht mittleren Molekulargewichten M_{w} (Gewichtsmittelwert) von 10 000 bis 200 000, vorzugsweise von 20 000 bis 80 000.

Die Diphenole der allgemeinen Formel II sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782.)

Geeignete Kettenabbrecher sind beispielsweise Phenol, p-tert.-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie beispielsweise p-Nonylphenyl, 3,5-di-tert.-Butylphenol, p-tert.-Octylphenol, p-Dodecylphenol, 2-(3,5-dimethyl-heptyl)-phenol und 4-(3,5-Dimethylheptyl)-phenol.

Weitere geeignete Polycarbonate sind solche auf Basis von Hydrochinon oder Resorcin.

Außer den Komponenten A), B), C) und D) können die thermoplastischen Formmassen noch Zusatzstoffe wie Gleit- und Entformungsmittel, Pigmente, Farbstoffe, Flammschutzmittel, Antioxidantien, Stabilisatoren gegen Lichteinwirkung, faser- und pulverförmige Füll- und Verstärkungsmittel und Antistatika in den für diese Mittel üblichen Mengen enthalten. Besonders im Falle der Herstellung von Folien aus den erfindungsgemäßen Formmassen verwendet man Weichmacher mit, beispielsweise Copolymere einer mittleren Molmasse von 2000 bis 8000 aus 30 bis 70 Gew.-% Ethylenoxid und 70 bis 30 Gew.-% 1,2-Propylenoxid in Mengen von 0,5 bis 10 Gew.-%, bezogen auf die Summe der Komponenten A), B), C) und gegebenenfalls D).

Die Herstellung der erfindungsgemäßen Formmassen kann nach an sich bekannten Mischverfahren erfolgen, beispielsweise unter Aufschmelzen in einem Extruder, Banbury-Mischer, Kneter, Walzenstuhl oder Kalander. Die Komponenten können jedoch auch ohne Schmelzen "kalt" vermischt werden und das pulvrige oder aus Granulaten bestehende Gemisch wird erst bei der Verarbeitung aufgeschmolzen und homogenisiert.

Aus den Formmassen lassen sich Formkörper aller Art, insbesondere Folien und Flächengebilde, herstellen. Die Herstellung der Folien kann durch Extrudieren, Walzen, Kalandrieren und andere dem Fachmann bekannte Verfahren erfolgen. Die erfindungsgemäßen Formmassen werden dabei durch Erwärmen und/oder Friktion allein oder unter Mitverwendung von weichmachenden oder anderen Zusatzstoffen zu einer verarbeitungsfähigen Folie oder einem Flächengebilde (Platte) geformt.

Die erfindungsgemäßen thermoplastischen Formmassen haben gegenüber vergleichbaren Formmassen eine bessere Fließfähigkeit bei gleichzeitig verbesserter Entformbarkeit, Tiefziehfestigkeit und nicht verschlechterter Farbhaftung und sind weitgehend frei von ausdünstenden und ausschwitzenden Bestandteilen.

Sie eignen sich zur Herstellung von Folien, Formkörpern (besonders Platten) die durch Thermoformen und Tiefziehen hervorragend weiterverarbeitet werden können, ebenso wie zur Herstellung von Spritzgußteilen, insbesonders für schnelle Verarbeitung mit kurzen Taktzeiten.

### Beispiele

Es wurden folgende Bestandteile hergestellt (alle %-Angaben sind Gew.-%)
A: Herstellung der Komponenten A:
A1: Herstellung einer Komponente A-I:
   Partikelförmiges Pfropfpolymerisat aus vernetztem Poly-n-Butylacrylat (Kern) und Styrol/Acrylnitril-Copolymer (Schale)
   Zu einer Mischung aus 3 g eines Polybutylacrylat-Saatlatex, 100 g Wasser und 0,2 g Kaliumpersulfat wurden im Verlauf von 4 Stunden bei 60°C eine Mischung aus 98 g n-Butylacrylat und 2 g Dihydrodicyclopentadienylacrylat sowie getrennt davon eine Lösung von 1 g Na-C₁₂-C₁₈-Paraffinsulfonat in 50 g Wasser gegeben. Die Polymerisation wurde danach noch für 3 Stunden fortgesetzt. Der mittlere Teilchendurchmesser d₅₀ des entstandenen Latex betrug 430 nm bei enger Verteilung der Teilchengröße (Q = 0,1).
   150 g dieses Latex wurden mit 60 g Wasser, 0,03 g Kaliumpersulfat und 0,05 g Lauroylperoxid vermischt, wonach auf die Latexteilchen im Laufe von 3 Stunden bei 65°C zunächst 20 g Styrol und danach im Laufe von weiteren 4 Stunden ein Gemisch aus 15 g Styrol und 5 g Acrylnitril aufgepfropft wurden. Anschließend wurde das Polymerisat mit einer Calciumchloridlösung bei 95°C ausgefällt, abgetrennt, mit Wasser gewaschen und im warmen Luftstrom getrocknet. Der Pfropfgrad des Polymerisates betrug 35 % und die Teilchen hatten einen mittleren Durchmesser d₅₀ von 510 nm.
   Das Pfropfpolymerisat setzte sich wie folgt zusammen (gerundete Werte):
   60 Gew.-% eines Pfropfkerns aus Polybutylacrylat, vernetzt,
   20 Gew.-% einer inneren Pfropfstufe aus Styrol-Polymer und
   20 Gew.-% einer äußeren Pfropfstufe aus Styrol/Acrylnitril-Copolymer im Gewichtsverhältnis S/AN 3:1.

   Das anfangs eingesetzte Saat-Polymere wurde nach dem Verfahren der EP-B 6503 (Spalte 12, Zeile 55, bis Spalte 13, Zeile 22) durch Polymerisation von n-Butylacrylat und Tricyclodecenylacrylat in wäßriger Emulsion hergestellt und hatte einen Feststoffgehalt von 40 %.
   Die bei der Beschreibung der Komponente A) erwähnte mittlere Teilchengröße ist das Gewichtsmittel der Teilchengrößen.
   Der mittlere Durchmesser entspricht dem d₅₀-Wert, demzufolge 50 Gew.-% aller Teilchen einen kleineren und 50 Gew.-% einen größeren Durchmesser haben als derjenige Durchmesser, der dem d₅₀-Wert entspricht. Um die Breite der Teilchengrößenverteilung zu charakterisieren, werden zusätzlich zum d₅₀-Wert oftmals der d₁₀- sowie der d₉₀-Wert angegeben. 10 Gew.-% aller Teilchen sind kleiner und 90 Gew.-% größer als der d₁₀-Durchmesser. Analog haben 90 Gew.-% aller Teilchen einen kleineren und 10 Gew.-% einen größeren Durchmesser als denjenigen, der dem d₉₀-wert entspricht. Der Quotient Q = (d₉₀-d₁₀)/d₅₀ ist ein Maß für die Breite der Teilchengrößenverteilung. Je kleiner Q ist, desto enger ist die Verteilung.

A2: Herstellung einer Komponente A-II:
a) Herstellung einer Pfropfgrundlage A-II-1:
   Die Herstellung der jeweiligen Pfropfgrundlage auf Acrylesterbasis (a₁₁₁, und a₁₁₂) erfolgte nach folgender allgemeiner Vorschrift:
   160 g eines Gemisches aus 98 % Butylacrylat und 2 % Dihydrodicyclopentadienylacrylat (DCPA) wurden in 1500 g Wasser unter Zusatz von 5 g des Natriumsalzes einer C₁₂-bis C₁₈-Paraffinsulfonsäure, 3 g Kaliumperoxodisulfat, 3 g Natriumhydrogencarbonat und 1,5 g Natriumpyrophosphat unter Rühren auf 60°C erwärmt. 10 Minuten nach dem Anspringen der Polymerisationsreaktion wurden innerhalb von 3 Stunden weitere 840 g der in der Tabelle angegebenen Mischung zugegeben. Nach Beendigung der Monomerzugabe wurde die Emulsion noch eine Stunde bei 60°C gehalten.
b) Herstellung eines teilchenförmigen Pfropfpolymerisats A-II:
   2100 g der nach Vorschrift a) hergestellten Emulsion wurden mit 1150 g Wasser und 2,7 g Kaliumperoxodisulfat gemischt und unter Rühren auf 65°C erwärmt. Nach Erreichen der Reaktionstemperatur wurden im Lauf von 3 Stunden 560 g Styrol/Acrylnitril in Verhältnis 75:25. Nach Beendigung der Zugabe wurde die Emulsion noch 2 Stunden bei 65°C gehalten. Das Pfropfpolymerisat wurde mittels Calciumchloridlösung bei 95°C aus der Emulsion gefällt, mit Wasser gewaschen und im warmen Luftstrom getrocknet.

A3: Herstellung einer Komponente A-III:
a) Die Herstellung der jeweiligen Pfropfgrundlage auf Butadienbasis (a₁₂₁, a₁₂₂) erfolgte nach folgender Vorschrift:
   Durch Polymerisation von 600 g Butadien in Gegenwart von 6 g tert.-Dodecylmercaptan, 7 g C₁₄-Na-Alkylsulfonat als Emulgator, 2 g Kaliumperoxodisulfat und 2 g Natriumpyrophosphat in 800 ml Wasser wird bei 65°C ein Polybutadienlatex hergestellt. Der Umsatz beträgt 98 %. Es wird ein Latex erhalten, dessen mittlere Teilchengröße bei 100 nm liegt. Der erhaltene Latex wird durch Zusatz von 25 g einer Emulsion eines Copolymeren aus 96 Teilen Ethylacrylat und 4 Teilen Methacrylsäureamid mit einem Feststoffgehalt von 10 Gew.-% agglomeriert, wobei ein Polybutadienlatex mit einer mittleren Teilchengröße von 350 nm entsteht.
b) Herstellung eines teilchenförmigen Pfropfpolymerisats A-III:
   Nach Zusetzen von 400 g Wasser, 4 g Na-C₁₄-Alkylsulfonat und 2 g Kaliumperoxodisulfat zu der nach Vorschrift 3b hergestellten Pfropfgrundlage werden 400 g einer Mischung aus Styrol und Acrylnitril (70:30) innerhalb von 4 Stunden zugeführt. Die Polymerisation erfolgt unter Rühren des Ansatzes bei 75°C. Der Umsatz, bezogen auf Styrol-Acrylnitril ist praktisch quantitativ. Die erhaltene Pfropfkautschukdispersion wird mittels Magnesiumsulfatlösung gefällt und das abgetrennte Pfropfmischpolymerisat mit destilliertem Wasser gewaschen und getrocknet.

B: Herstellung der Komponente B:
   Die Herstellung der Komponente B erfolgte nach dem Verfahren der kontinuierlichen Lösungspolymerisation, wie es im Kunststoff-Handbuch, Hrg. R. Vieweg und G. Daumiller, Bd V "Polystyrol", Carl-Hanser-Verlag, München 1969, Seite 122 bis 124, beschrieben ist.
B1: Komponente B1:
   Copolymer aus Styrol und Acrylnitril mit 35 Gew.-%, Acrylnitril (AN) und einer Viskositätszahl von 60 ml/g, gemessen als 0,5 %ige Lösung in Dimethylformamid gemäß DIN 53726
B2: Komponente B2:
   Copolymer aus α-Methylstyrol und Acrylnitril mit 30 Gew.-%, Acrylnitril und einer Viskositätszahl von 58 ml/g, gemessen als 0,5 %ige Lösung in Dimethylformamid gemäß DIN 53726
B3: Komponente B3:
   Copolymer aus Styrol und Acrylnitril mit 35 Gew.-%, Acrylnitril (AN) und einer Viskositätszahl von 80 ml/g, gemessen als 0,5 %ige Lösung in Dimethylformamid gemäß DIN 53726
C: Herstellung der Komponente C:
   Ein simultan heiz- und kühlbarer 50 1-Edelstahlautoklav mit Rührer wurde durch Spülen mit Stickstoff und Auskochen mit einer Lösung von sec.-Butyllithium und 1,1-Diphenylethylen in Cyclohexan und Trocknen vorbereitet. Es wurden 22,8 l Cyclohexan eingefüllt, wonach 42 ml sek.-Butyllithium und 65,8 ml Tetrahydrofuran zugesetzt wurden. In der Tabelle 1 sind die einzelnen Stüfen der Polymerisation zusammengefaßt.
   In jeder Stufe war die Dauer des Monomerzulaufs klein gegenüber der Dauer der Polymerisation. Durch Heizung bzw. Kühlung des Reaktormantels wurden die angegebenen Anfangs- bzw. Endtemperaturen eingestellt.
   Nach Umsetzungsende (Verbrauch der Monomeren) wurde die Polymerisation abgebrochen, indem man mit Ethanol bis zur Farblosigkeit titrierte, und die Mischung mit einem geringen Säureüberschuß angesäuert.
   Die Lösung wurde auf einem Entgasungsextruder, welcher mit drei Entgasungsdomen sowie Vorwärts- und Rückwärtsentgasung versehen war, bei 200°C aufgearbeitet. Das auf diese Weise erhaltene Granulat wurde zur Herstellung der Formmasse verwendet.

**Tabelle 1**

| Stufe | 1 | 2 | 3 | 4 | 5 |
|---|---|---|---|---|---|
| Zulauf Butadien [g] | - | 1120 | 1120 | 1120 | - |
| Zulauf Styrol [g] | 1008 | 1412 | 1412 | 1412 | 1008 |
| T_{Anfang} [°C] | 30 | 77 | 73 | 74 | 74 |
| T_{Ende} [°C] | 77 | 102 | 95 | 88 | 85 |
| Pol. dauer [min] | 12 | 14 | 10 | 26 | 14 |

Das erhaltene Polymere hatte folgende mittlere Molmassen (in g/mol), wie durch Gelpermeationschromatographie (Kalibration gegen Polystyrol) ermittelt wurde: Zahlenmittel $\overline{\text{M}}$ₙ 119 000, Viskositätsmittel $\overline{\text{M}}$ᵥ 158 000, Gewichtsmittel $\overline{\text{M}}$_{w} 176 000.

Die Glasübergangstemperaturen T_{g} wurden mittels DSC bestimmt und betrugen -16°C für die Weichphase und +75°C für die Hartphase. Die Breite der Glasstufe, ein Maß für die Homogenität der Phase, betrug 9°C für die Weichphase und 12°C für die Hartphase.

Der Schmelzvolumenindex MVI wurde bei 200°C und einer Belastung von 5 kg nach DIN 53 735 bestimmt und betrug 8,5 ml/10 min.

Die Herstellung der erfindungsgemäßen Formmassen und der Vergleichsmassen erfolgte auf einem ZSK-30 Extruder der Fa. Werner und Pfleiderer bei 250°C mit 200 UPM und 10 kg/h Durchsatz. Das Produkt wurde in einem Wasserbad abgekühlt, granuliert und auf einer Spritzgußmaschine (Arburg Allrounder) zu Zugstäben abgespritzt. Die Prüfung der Reißdehnung erfolgte nach DIN 53504

Die Messung der Fließfähigkeit (MVI) erfolgte nach DIN 53735 unter den in der Tabelle angegebenen Bedingungen.

Die Ergebnisse sind in der folgenden Tabelle aufgeführt.

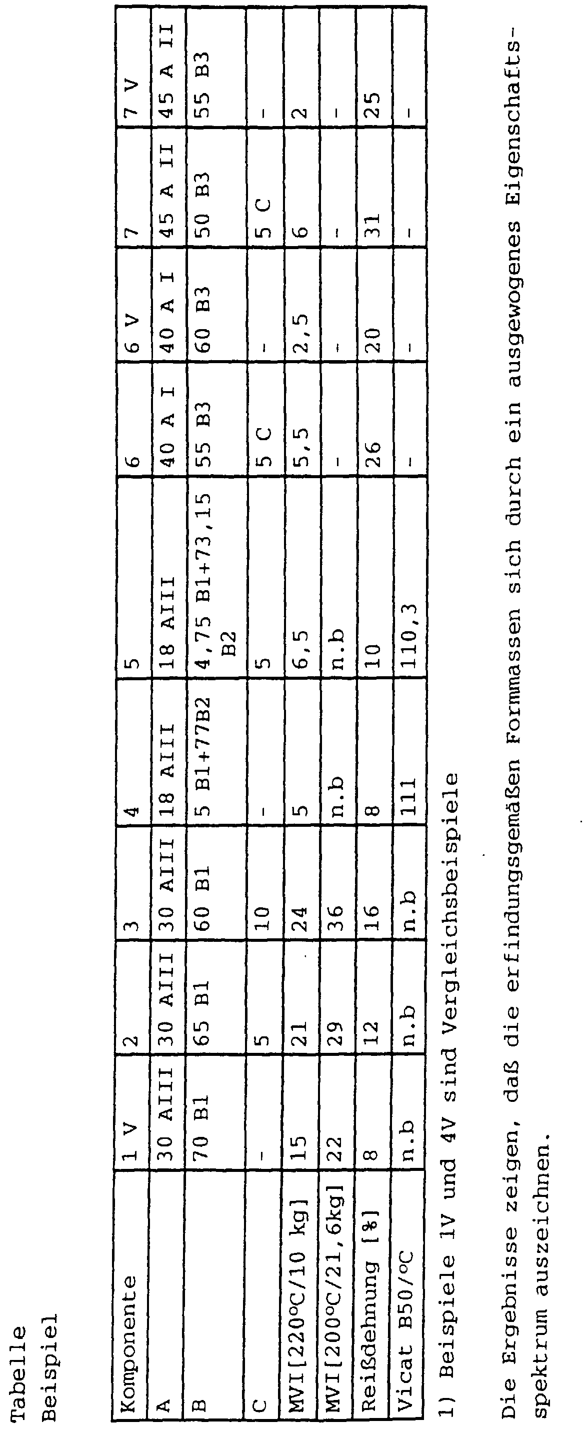

## Patentansprüche

1. Thermoplastische Formmassen, enthaltend
A) 5 bis 98 Gew.-%, bezogen auf das Gesamtgewicht der Formmassen, eines kautschukartigen Pfropfcopolymerisats aufgebaut aus
a₁) 30 bis 90 Gew.-%, bezogen auf A), einer Pfropfgrundlage a₁) aufgebaut aus
a₁₁) einem zumindest teilweise vernetzten Acrylester-Polymerisat gebildet aus
a₁₁₁) 50 bis 99,9 Gew.-%, bezogen auf a₁₁), mindestens eines Alkylacrylates mit 1 bis 10 C-Atomen im Alkylrest,
a₁₁₂) 0,1 bis 5 Gew.-%, bezogen auf a₁₁), eines polyfunktionellen, vernetzend wirkenden Monomeren und
a₁₁₃) 0 bis 49,9 Gew.-%, bezogen auf a₁₁), eines weiteren mit a₁₁₁) copolymerisierbaren Monomeren aus der Gruppe der Vinylalkylether mit 1 bis 8 C-Atomen im Alkylrest, Butadien, Isopren, Styrol, Acrylnitril, Methacrylnitril und/oder Methylmethacrylat
und/oder
a₁₂) einem Dienpolymerisat, aufgebaut aus
a₁₂₁) 50 bis 100 Gew.-%, bezogen auf a₁₂) eines Diens und
a₁₂₂) 0 bis 50 Gew.-%, bezogen auf a₁₂) weiterer copolymerisierbarer Monomeren aus der Gruppe der Vinylalkylether mit 1 bis 8 C-Atomen in der Alkylgruppe, Alkylacrylaten mit 1 bis 10 C-Atomen in der Alkylgruppe, Isopren, Styrol, Acrylnitril, Methacrylnitril und/oder Methylmethacrylat,
und
a₂) 10 bis 70 Gew.-%, bezogen auf A), einer auf die Pfropfgrundlage aufgepfropften Hülle, aufgebaut aus
a₂₁) 50 bis 95 Gew.-%, bezogen auf a₂), eines vinylaromatischen Monomeren,
a₂₂) 5-50 Gew.-% polaren, copolymerisierbaren Comonomeren aus der Gruppe Acrylnitril, Methacrylnitril, Ester der (Meth)acrylsäure mit 1 bis 4 C-Atomen im Alkylrest, Maleinsäureanhydrid und dessen Imide, (Meth)acrylamid und/oder Vinylalkylether mit 1 bis 8 C-Atomen im Alkylrest,
B) 1 bis 90 Gew.-%, bezogen auf das Gesamtgewicht der Formmasse, eines Copolymerisats aus
b₁) 50 bis 99 Gew.-% eines vinylaromatischen Monomeren
und
b₂) 1 bis 50 Gew.-% Monomeren wie für a₂₂) beschrieben,
C) 1 bis 70 Gew.-% eines kautschukelastischen Block-copolymerisates aus mindestens einem einpolymerisierte Einheiten eines vinylaromatischen Monomeren aufweisenden, eine Hartphase bildenden Block C_{A}
und/oder eines Dienmonomere aufweisenden, eine erste kautschukelastische (Weich-)Phase bildenden Blocks C_{B}
und mindestens einem einpolymerisierte Einheiten sowohl eines vinylaromatischen Monomeren wie eines Diens aufweisenden elastomeren, eine (gegebenenfalls zweite oder weitere) Weichphase bildenden Block C_{B/A},
wobei die Glastemperatur T_{g} des Blocks C_{A} über 25°C und die des Blocks C_{B/A} unter 25°C liegt und das Phasenvolumen-Verhältnis von Block C_{A} zu Block C_{B/A} so gewählt ist, daß der Anteil der Hartphase am gesamten Blockcopolymerisat 1 - 40 Volumen-% und der Gewichtsanteil des Diens weniger als 50 Gew.% beträgt,
D) 0-300 Gew.-%, bezogen auf das Gewicht der Komponenten A) bis C), eines aromatischen Polycarbonats,
E) 0 bis 20 Gew.-%, bezogen auf das Gesamtgewicht der Formmassen, üblicher Zusatzstoffe und Verarbeitungshilfsmittel.

2. Thermoplastische Formmassen nach Anspruch 1, wobei als Komponente A) ein Pfropfcopolymerisat mit einer Pfropfgrundlage a₁₂) eingesetzt wird.

3. Verwendung der thermoplastischen Formmassen nach Anspruch 1 oder 2 zur Herstellung von Folien und Formkörpern.

4. Formkörper erhältlich unter Verwendung der thermoplastischen Formmassen gemäß Anspruch 1 oder 2.

## Claims

1. A thermoplastic molding composition comprising
A) from 5 to 98 % by weight, based on the total weight of the molding composition, of an elastomeric graft copolymer built up from
a₁) from 30 to 90 % by weight, based on A), of a graft base a₁) built up from
a₁₁) an at least partially crosslinked acrylate polymer formed from
a₁₁₁) from 50 to 99.9 % by weight, based on a₁₁), of at least one C₁-C₁₀-alkyl acrylate,
a₁₁₂) from 0.1 to 5 % by weight, based on a₁₁), of a polyfunctional crosslinking monomer and
a₁₁₃) from 0 to 49.9 % by weight, based on a₁₁), of a further monomer which is copolymerizable with a₁₁₁) selected from the group consisting of the vinyl C₁-C₈-alkyl ethers, butadiene, isoprene, styrene, acrylonitrile and methacrylonitrile, and/or methyl methacrylate
and/or
a₁₂) a diene polymer built up from
a₁₂₁) from 50 to 100 % by weight, based on a₁₂), of a diene and
a₁₂₂) from 0 to 50 % by weight, based on a₁₂), of other copolymerizable monomers selected from the group consisting of the vinyl C₁-C₈-alkyl ethers, C₁-C₁₀-alkyl acrylates, isoprene, styrene, acrylonitrile and methacrylonitrile, and/or methyl methacrylate,
and
a₂) from 10 to 70 % by weight, based on A), of a shell grafted onto the graft base and built up from
a₂₁) from 50 to 95 % by weight, based on a₂), of a vinylaromatic monomer,
a₂₂) from 5 to 50 % by weight of polar, copolymerizable comonomers selected from the group consisting of acrylonitrile, methacrylonitrile, C₁-C₄-alkyl (meth)acrylates, maleic anhydride and maleimides, and (meth)acrylamide, and/or vinyl C₁-C₈-alkyl ethers,
B) from 1 to 90 % by weight, based on the total weight of the molding composition, of a copolymer made from
b₁) from 50 to 99 % by weight of a vinylaromatic monomer
and
b₂) from 1 to 50 % by weight of monomers as described for a₂₂),
C) from 1 to 70 % by weight of an elastomeric block copolymer comprising at least one block C_{A} which forms a hard phase and has in its polymer chain units of a vinylaromatic monomer
and/or of a block C_{B} which forms a first elastomeric (soft) phase and comprises diene monomers
and at least one elastomeric block C_{B/A} which forms a (if appropriate second or further) soft phase, and has in its polymer chain units of both a vinylaromatic monomer and a diene,
where the glass transition temperature T_{g} of the block C_{A} is above 25°C and that of the block C_{B/A} is below 25°C and the phase-volume ratio of block C_{A} to block C_{B/A} is selected so that the proportion of the hard phase in the entire block copolymer is from 1 to 40 % by volume, and the proportion by weight of the diene is less than 50 % by weight,
D) from 0 to 300 % by weight, based on the weight of components A) to C), of an aromatic polycarbonate,
E) from 0 to 20 % by weight, based on the total weight of the molding composition, of conventional additives and processing aids.

2. A thermoplastic molding composition as claimed in claim 1, wherein a graft copolymer having a graft base a₁₂) is employed as component A).

3. The use of a thermoplastic molding composition as claimed in claim 1 or 2 for producing a film or a shaped article.

4. A shaped article obtainable using a thermoplastic molding composition as claimed in claim 1 or 2.

## Revendications

1. Masses à mouler thermoplastiques, qui contiennent
A) 5 à 98% en poids, par rapport au poids total des masses à mouler, d'un copolymère de greffage caoutchouteux, constitué de
a₁) 30 à 90% en poids, par rapport à A) d'une base de greffage a₁), constituée de
a₁₁) un polymère d'ester acrylique au moins partiellement réticulé, formé de
a₁₁₁) 50 à 99,9% en poids, par rapport à a₁₁), d'au moins un acrylate d'alkyle comportant de 1 à 10 atomes de carbone dans le reste alkyle,
a₁₁₂) 0,1 à 5% en poids, par rapport à a₁₁), d'un monomère polyfonctionnel, à activité réticulante, et
a₁₁₃) 0 à 49,9% en poids, par rapport à a₁₁), d'un autre monomère copolymérisable avec a₁₁₁), qui appartient au groupe des éthers vinylalkyliques comportant de 1 à 8 atomes de carbone dans le reste alkyle, du butadiène, de l'isoprène, du styrène, de l'acrylonitrile, du méthacrylonitrile et/ou du méthacrylate de méthyle,
et/ou
a₁₂) un polymère de diène, constitué de
a₁₂₁) 50 à 100% en poids, par rapport à a₁₂) d'un diène, et
a₁₂₂) 0 à 50% en poids, par rapport à a₁₂), d'autres monomères copolymérisables appartenant au groupe des éthers vinylalkyliques comportant de 1 à 8 atomes de carbone dans le groupe alkyle, des acrylates d'alkyle comportant de 1 à 10 atomes de carbone dans le groupe alkyle, de l'isoprène, du styrène, de l'acrylonitrile, du méthacrylonitrile et/ou du méthacrylate de méthyle,
et
a₂) 10 à 70% en poids, par rapport à A), d'une enveloppe ou gaine greffée sur la base de greffage, constituée de
a₂₁) 50 à 95% en poids, par rapport à a₂), d'un monomère vinylaromatique,
a₂₂) 5 à 50% en poids de comonomères copolymérisables et polaires, appartenant au groupe de l'acrylonitrile, du méthacrylonitrile, des esters de l'acide méth(acrylique) qui comportent de 1 à 4 atomes de carbone dans le radical alkyle, de l'anhydride de l'acide maléique et de ses imides, du (méth)acrylamide et/ou des éthers vinylalkyliques qui comportent de 1 à 8 atomes de carbone dans le reste alkyle,
B) 1 à 90% en poids, par rapport au poids total de la masse à mouler, d'un copolymère formé de
b₁) 50 à 99% en poids d'un monomère vinylaromatique,
et
b₂) 1 à 50% en poids de monomères tels que ceux décrits pour a₂₂),
C) 1 à 70% en poids d'un copolymère séquencé présentant l'élasticité du caoutchouc, constitué d'une séquence C_{A} formant une phase dure, présentant au moins une unité incorporée par polymérisation d'un monomère vinylaromatique,
et/ou d'une séquence C_{B} présentant un monomère du type diène, formant une première phase (molle) ayant l'élasticité du caoutchouc,
et d'une séquence C_{B/A} formant une (éventuellement seconde ou autre) phase molle, élastomérique, présentant au moins une unité incorporée par polymérisation aussi bien qu'un monomère vinylaromatique comme un diène,
où la température de transition vitreuse T_{g} de la séquence C_{A} est supérieure à 25°C et celle de la séquence C_{B/A} est inférieure à 25°C et le rapport volumique des phases de la séquence C_{A} à la séquence C_{B/A}, de sorte que la fraction de la phase dure dans le copolymère séquencé total varie de 1 à 40% en volume et que la fraction pondérale du diène soit inférieure à 50% en poids,
D) 0 à 300% en poids, par rapport au poids des composants A) à C), d'un polycarbonate aromatique,
E) 0 à 20% en poids, par rapport au poids total de la masse à mouler, d'additifs et d'adjuvants de mise en oeuvre habituels.

2. Masses à mouler thermoplastiques suivant la revendication 1, où l'on utilise, à titre de composant A), un copolymère de greffage avec une base de greffage a₁₂).

3. Utilisation des masses à mouler thermoplastiques suivant la revendication 1 ou 2, pour la fabrication de feuilles et d'articles moulés.

4. Articles moulés que l'on peut obtenir par l'utilisation des masses à mouler thermoplastiques suivant la revendication 1 ou 2.
